Europäisches Patentamt

European Patent Office

Office européen des brevets

(19)

(11) Publication number: **0 005 595**
**B1**

(12) **EUROPEAN PATENT SPECIFICATION**

(45) Date of publication of patent specification: **27.04.83**

(51) Int. Cl.³: **H 05 B 41/34, H 01 S 3/092**

(21) Application number: **79300722.0**

(22) Date of filing: **27.04.79**

(54) Laser flashtube power supply.

(30) Priority: **28.04.78 GB 1687978**

(43) Date of publication of application:
**28.11.79 Bulletin 79/24**

(45) Publication of the grant of the patent:
**27.04.83 Bulletin 83/17**

(84) Designated Contracting States:
**BE CH DE FR IT NL SE**

(56) References cited:
**DE - A - 2 036 627**
**GB - A - 1 119 431**
**US - A - 3 430 159**

(73) Proprietor: **J.K. LASERS LIMITED**
**23 Somers Road**
**Rugby Warwickshire, CV22 7DG (GB)**

(72) Inventor: **Burbeck, Ronald Noel**
**4, Longrood Road**
**Rugby Warwickshire (GB)**
Inventor: **Keightley, Michael Rodney**
**20, Longrood Road**
**Rugby Warwickshire (GB)**

(74) Representative: **Wilson, Thomas Arthur Fletcher
et al,**
**10, Grosvenor House Grosvenor Road**
**Coventry West Midlands, CV1 3FZ (GB)**

Courier Press, Leamington Spa, England

Laser flashtube power supply

This invention relates to a power supply circuit for providing pulses of desired profile to a flashtube for optically pumping a laser.

Driving laser flashtubes with pulses in excess of about two milliseconds (2 ms) is difficult and hitherto has entailed the use of multiple section capacitor inductor networks in a similar manner to that used in conventional radar pulse modulators. Because the impedance of a conducting flashtube is very low, the capacitor inductor network is bulky and expensive, especially for long duration pulses. Moreover because the capacitors are charged to a high voltage (approximately twice the lamp operating voltage) varying the pulse duration by tap changing is difficult. Such an arrangement is, therefore, very inflexible. Furthermore, in some laser applications there is also a requirement to carefully control the profile of the pumping pulse. This is difficult, if not impossible, to achieve with any degree of flexibility with a capacitor inductor network.

In DE—A—2 036 627 there is shown a power supply circuit which provides a high frequency pulse train to a discharge tube. The mark space ratio of the pulse train may be controlled to allow for dimming of the discharge tube. There is no disclosure of providing pulses of desired profile to a laser flashtube.

The object of this invention is to overcome the limitations of the above-mentioned capacitor inductor network and in particular to provide a simple, compact and relatively inexpensive power supply circuit and method of operation thereof for driving a laser flashtube and having a high degree of flexibility as regards variation in pulse duration and profile in the current applied to the flashtube.

According to one aspect of this invention there is provided a power supply circuit for providing pulses of desired profile to a laser flashtube comprising a high frequency switch for providing a high frequency pulse train from a DC source, a filter for substantially removing the high frequency components from the high frequency pulse train, and means for modulating the mark space ratio of the individual pulses of the pulse train in accordance with a control signal whereby pulses having a desired profile are provided at the output of the filter.

According to another aspect of this invention there is provided a method of providing pulses to a laser flashtube comprising producing a high frequency pulse train using a high frequency switch connected to a DC source, modulating the mark space ratio of the individual pulses of the pulse train in accordance with a control signal and filtering the high frequency pulse train to remove the high frequency components therefrom whereby pulses of the desired profile are supplied to the laser flashtube.

In practice the procedure is as follows, reference being had to the accompanying drawings, in which:—

Figure 1 is a circuit diagram of the power supply circuit to a flashtube; and

Figures 2 to 8 are diagrams of waveforms appearing in the circuit of Figure 1.

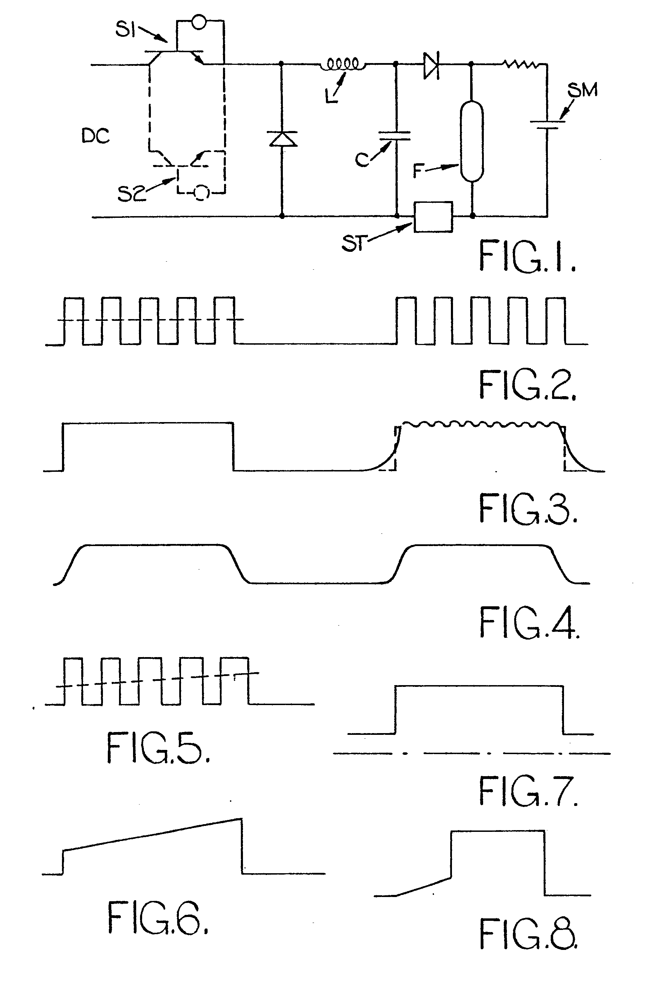

Referring to Figure 1, the or each flashtube F can be repetitively triggered or is preferably kept simmering at a low level continuously. Thus in practice the simmer mode would be used in the vast majority of cases as the current rise time into the flashtube would be excessive for most applications using a repetitively triggered arrangement. The simmer current supply is indicated at SM and the flashtube starter at ST.

The input of the circuit receives a suitable direct current (DC) supply which can be conveniently provided by a rectified current from the usual mains supply. A high frequency switch S1 which may be a transistor or thyristor (or two or more thereof) converts the primary DC supply into a high frequency pulse train, the mark space ratio of which, and hence average value of the pulse train are adjustable. The mark space ratio is readily adjustable by conventional means, e.g. in which a variable low level DC voltage is compared with a sawtooth waveform operating at the required high frequency switching speed and the output applied to control the high frequency switch S1. Typically the low level DC voltage is variable between 0 to 10 volts. An inductor and capacitor arrangement LC forms a filter to substantially remove the high frequency components from the high frequency pulse train. The output from the filter LC is supplied to the flashtube F.

The high frequency pulses from the high frequency switch S1 are thus modulated to give a desired pulse profile into the flashtube F and the filter LC is arranged to pass the resulting pulses of desired profile and filter the high frequency components.

When the above-mentioned low level voltage is at zero or in some cases at a maximum the pulses of the pulse train are of zero duration, i.e. where intervals are required between pulse trains in determining the appropriate duration of each pulse train and of the resulting pulse of desired profile to the flashtube F. This affords considerable scope in controlling pulse duration.

The pulse train waveform at the output of the high frequency switch S1 is indicated in Figure 2 and the resulting pulse profile form is shown in Figure 3, i.e. at the output from the filter LC. Thus a typical duration, form and frequency of the resulting pulses will be apparent from Figure 3 and these then pass to the flashtube F. The corresponding current to the flashtube F is indicated in Figure 4.

However, the duration and frequency of the pulses of desired profile can be varied as above described and according to requirements as indicated in Figures 5 and 6. Furthermore, the mark space ratio of the high frequency pulse train can be varied both on a pulse to pulse basis to the flashtube F or during a flashtube pulse thus varying both pulse amplitude and pulse shape. As a result the rise and fall times of the pulse and the slope of the top of the pulse can be readily adjusted.

The power supply circuit according to this invention also enables the chopping system to be employed for supplying a low level continuous simmer current to the flashtube F so that the need for a second DC supply to the latter is obviated. This can be achieved either by raising the average value of the modulated pulsed waveform onto a pedestal as indicated in Figure 7 or by operating a parallel high frequency switch S2 (see Figure 1) operating continuously rather than being modulated with the pulse envelope.

Power supply means in accordance with this invention has particular, but not exclusive, practical application in driving flashtubes of lasers intended for laser machining applications including welding, soldering and like operations and also to certain medical applications such as the coagulation of gastrointestinal ulcers.

As will be apparent from the foregoing the power supply circuit enables pulses of longer duration, (e.g. from 1 millisecond to one second) to be obtained than is practical with the conventional capacitor inductor network system and which is particularly desirable in the abovementioned applications, especially in the case of welding or soldering as well as in medical applications. As will also be apparent the laser pumping pulse profile can be readily optimised for a particular application.

Furthermore, the pumping pulse profile can be changed between pulses by computer or micro processor control inputs, allowing, for example, different welds to be made on the same workpiece. This in particularly applicable to overall computer control of a series of welding operations or the like.

It is believed that a laser system employing a power supply circuit according to this invention will be more efficient due to (a) the elimination of the inherently low efficiency of a capacitor charging power supply system, and (b) the elimination of losses inherent in a capacitor inductor network and also the provision of ideal flashtube driving pulses at all operating voltages. (A capacitor inductor network system can only be matched to the flashtube over a narrow range of operating voltage).

A still further advantage of the present power supply means is that the flashtube simmer current can be "ramped up" prior to the main pulse, i.e. as indicated in Figure 8. This results in faster light pulse rise times and is also in the interests of a longer serviceable life of the tube.

## Claims

1. A power supply circuit for providing pulses of desired profile to a laser flashtube (F) comprising a high frequency switch (S1) for providing a high frequency pulse train from a DC source, and characterised in that the circuit further comprises a filter (L, C) for substantially removing the high frequency components from the high frequency pulse train and means for modulating the mark space ratio of the individual pulses of the pulse train in accordance with a control signal whereby pulses having a desired profile are provided at the output of the filter (L, C).

2. A power supply circuit as claimed in Claim 1, characterised in that said modulating means compares the control signal with a sawtooth waveform operating at the required high frequency, said control signal being a variable DC signal of low voltage.

3. A power supply circuit as claimed in any one of the preceding claims, characterised in that it includes a second high frequency switch (S2) for providing a low level continuous simmer current to the flashtube.

4. A power supply circuit as claimed in any one of the preceding claims, characterised in that the filter (L, C) comprises an inductor/capacitor arrangement.

5. A method of providing pulses of a desired profile to a laser flashtube comprising producing a high frequency pulse train using a high frequency switch connected to a DC source and characterised in that the method further comprises modulating the mark space ratio of the individual pulses of the pulse train in accordance with a control signal and filtering the high frequency pulse train to remove the high frequency components therefrom whereby pulses of the desired profile are supplied to the laser flashtube.

6. A method as claimed in Claim 5, characterised in that the DC level of the high frequency pulse train is raised to provide a low level simmer current to the flashtube.

## Revendications

1. Circuit d'alimentation destiné à transmettre des impulsions de profil voulu à une lampe à éclairs (F) d'un laser comprenant un commutateur (S1) à haute fréquence destiné à transmettre un train d'impulsions à haute fréquence à partir d'une source de courant continu, et caractérisé en ce que le circuit comprend en outre un filtre (L, C) destiné à supprimer pratiquement les composantes à haute fréquence du train d'impulsions à haute fréquence et un dispositif de modulation du rapport marque-espace des impulsions individuelles du train d'impulsions en fonction d'un signal de commande si bien que des impulsions ayant un profil voulu sont transmises à la sortie du filtre (L, C).

2. Circuit d'alimentation selon la revendication 1, caractérisé en ce que le dispositif de modulation compare le signal de commande à une forme d'onde en dents de scie fonctionnant à la haute fréquence nécessaire, le signal de commande étant un signal variable en courant continu de faible tension.

3. Circuit d'alimentation selon l'une quelconque des revendications précédentes, caractérisé en ce qu'il comprend un second commutateur à haute fréquence (S2) destiné à transmettre un courant continu d'excitation partielle de faible niveau à la lampe à éclairs.

4. Circuit d'alimentation selon l'une quelconque des revendications précédentes, caractérisé en ce que le filtre (L, C) est un arrangement à selfs et condensateurs.

5. Procédé de transmission d'impulsions ayant un profil voulu à une lampe à éclairs d'un laser, comprenant la formation d'un train d'impulsions à haute fréquence à l'aide d'un commutateur à haute fréquence relié à une source de courant continu, et caractérisé en ce que le procédé comporte en outre la modulation du rapport marque-espace des impulsions individuelles du train d'impulsions en fonction d'un signal de commande, et le filtrage du train d'impulsions à haute fréquence afin que les composantes à haute fréquence en soient retirées, si bien que les impulsions du profil voulu sont transmises à la lampe à éclairs du laser.

6. Procédé selon la revendication 5, caractérisé en ce que le niveau en courant continu du train d'impulsions à haute fréquence est élevé afin qu'un courant d'excitation partielle de faible niveau soit transmis à la lampe à éclairs.

### Patentansprüche

1. Stromversorgungsschaltung zur Erzeugung von Impulsen vorgegebener Impulsform für eine Laserblitzröhre (F) mit einem Hochfrequenzschalter (S1), der einen hochfrequenten Impulszug aus einer Gleichspannungsquelle erzeugt, gekennzeichnet durch

— eine Filterschaltung (L, C), die im wesentlichen hochfrequente Komponten aus dem hochfrequenten Impulszug ausscheidet, und

— eine Einrichtung, die das Tastverhältnis der einzelnen Impulse des Impulszugs entsprechend einem Steuersignal moduliert, wodurch Impulse mit einer gewünschten Impulsform am Ausgang des Filters (L, C) erzeugt werden.

2. Stromversorgungsschaltung nach Anspruch 1, dadurch gekennzeichnet, daß die Modulationseinrichtung das Steuersignal mit einem Sägezahnsignal vergleicht, das mit der benötigten hohen Frequenz abläuft, und daß das Steuersignal ein varänderliches Gleichspannungssignal geringer Spannung ist.

3. Stromversorgungsschaltung nach einem der vorangegangenen Ansprüche, dadurch gekennzeichnet, daß sie einen zweiten Hochfrequenzschalter (S2) enthält, der einen kontinuierlichen welligen Strom mit kleinem Pegel an die Blitzröhre liefert.

4. Stromversorgungsschaltung nach einem der vorangehenden Ansprüche, dadurch gekennzeichnet, daß das Filter (L, C) eine Spulen/Kondensatoranordnung aufweist.

5. Verfahren zur Erzeugung von Impulsen gewünschter Impulsform für eine Laserblitzröhre durch Erzeugung eines hochfrequenten Impulszugs unter Verwendung eines mit einer Gleichspannungsquelle verbundenen Hochfrequenzschalters, gekennzeichnet durch

— Modulation des Tastverhältnisses der einzelnen Impulse des Impulszugs entsprechend einem Steuersignal und

— Filterung des hochfrequenten Impulszugs zur Ausscheidung der hochfrequenten Komponenten, wodurch Impulse gewünschter Impulsform zur Speisung einer Laserblitzröhre erzeugt werden.

6. Verfahren nach Anspruch 5, dadurch gekennzeichnet, daß der Gleichspannungspegel des hochfrequenten Impulszugs angehoben und ein welliger Strom mit kleinem Pegel für die Blitzröhre erzeugt wird.

FIG.I.

FIG.2.

FIG.3.

FIG.4.

FIG.5.

FIG.7.

FIG.6.

FIG.8.